# EUROPEAN PATENT APPLICATION

(11) **EP 3 007 114 A1**
(43) Date of publication of application: **13.04.2016**
(21) Application number: 14187907.2
(22) Date of filing: 07.10.2014
(51) Int. Cl.: G06Q 10/06

(54) **Method of and system for controlling a manufacturing process**

(71) Applicant: Siemens Aktiengesellschaft, 80333 München (DE)
(72) Inventor: Raviola, Alessandro, 16156 Genova (IT); Reggio, Elena, 16133 Genova (IT)
(74) Representative: Maier, Daniel Oliver

(57) **Abstract**

A method of controlling manufacturing processes in a plant via a MES system comprises the step of providing the MES system with a single production-related entity (10) for manufacturing a plurality of products whose manufacturing processes share most of the process workflow and most of the resources. The providing step further includes:
- including (13) into the single production-related information entity (100a), for process stages in which non-shared resources are involved and which are to be performed according to parameters specific for each product in said plurality, information (105) about the parameters to be used for the different products; and
- at the creation of a production order for a specific product, reading from the single production-related information entity (100a) and including in the order (14) only the parameters specific for that product.

## Description

The invention-relates to a method and a system for controlling a manufacturing process, especially in a production facility employing a computer managed manufacturing execution system (MES).

As defined by the Manufacturing Enterprise Solutions Association (MESA International), a MES system "is a dynamic information system that drives effective execution of manufacturing operations", by managing "production operations from point of order release into manufacturing to point of product delivery into finished goods" and by providing "mission critical information about production activities to others across the organization and supply chain via bi-directional communication."

The functions that MES systems usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking.

For example, the Siemens Corp. offers a broad range of MES products, under its SIMATIC® product family.

Typically, at engineering time, MES client applications are used by system engineers for customizations according to the specific manufacturing plant requirements. Instead, at runtime, MES client applications are utilized by end-users such as plant operators or line responsible personnel.

An accurate modeling of the manufacturing process is essential for both scheduling and execution and to eventually achieve a good level of operational performance in manufacturing activities.

A well known example of a model for manufacturing is found in a standard called ISA-S95. The standard ISA S95 is an extension by a batch mode of the ISA S88 standard for process control engineering in manufacturing, applicable for discrete and continual production types. It defines schemes for the individual production steps, the schemes containing rules about information exchange between different production phases required in the manufacturing execution system.

In MES systems an essential step is product definition. This means that engineers need tools to define the process driving the production of a finished good. The engineers will define the production steps, the materials, the equipment and more generally all the resources involved and required to produce a specific product. The evidence of the need of product definition is present in ISA-S95 standard.

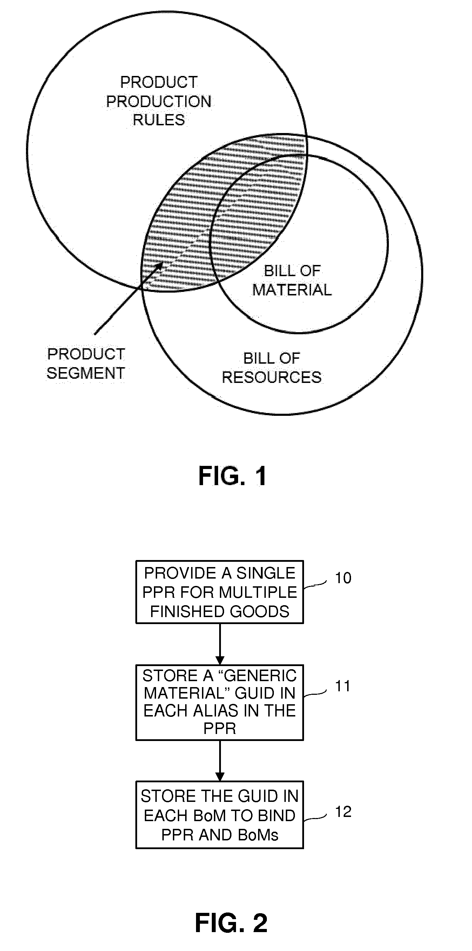

According ISA-S95 standard, and as shown in Fig. 1 that reproduces Fig. 8 of part 1 of the standard, the Product Definition Information includes three different areas of information, namely, information for scheduling or bill of resources (BoR), material information or bill of material (BoM) and product production rules (PPRs). The BoR is the list of all resources required to produce a product, including materials, personnel, equipment, energy and consumables. The BoM is the list of all materials required to produce a product showing the quantity of each required: these may be raw materials, intermediate materials, subassemblies, parts, and consumables. The PPRs are the information used to instruct a manufacturing operation how to produce a product. The overlap of a PPR and the associated BoR/BoM (dashed area in Fig. 1) forms the Product Segments (PSs). Hereinafter, the PPRs and the BoRs/BoMs will be also referred to as "production-related information entities" and "resource-related information entities", respectively. In the description, the "information entities" will also be referred to in short as "entities".

At present, the Product Definition and the Product Production Rule, as defined in ISA-S95, only foresee that a PPR produces a single product, and different product definitions are required for the production of even quite similar products, whose production shares most manufacturing steps and most materials.

This approach (one product definition for each product without regard of the product) clearly results, within MES systems, in a proliferation of product definitions, often with very little differences, and hence in increase of the complexity of the MES system. The high complexity makes errors easier, introduces inefficiency and results in poor performance and high cost of maintenance.

Niches where proliferation of product definitions may happen are, for example, the pharmaceutical industry or the food and beverage industry. For example, let us consider the finished goods "Vitamin C pills" and "Vitamin D pills": they have similar processes and similar ingredients except for some materials (the active principle is different) and some process parameter (different mixing times for example). Similarly, in food industry, in producing Vanilla Ice Creams and Chocolate Ice Creams, substantially everything will be shared, apart from the ingredient determining the flavor (Vanilla or Chocolate) and, possibly, some optional ingredient allowing production of some variants of a same ice cream.

In order to avoid the proliferation of product definitions (and hence of product production rules) in the situations mentioned above, the concept of "PPR multiple final material" has been already introduced. According to this concept, a MES system is provided with a single PPR for manufacturing a plurality of products whose manufacturing processes share most of the process workflow and most of the resources (in particular, materials). The single PPR includes, for a non-shared resource, a label defining said non-shared resource as a generic resource (or "alias"), and the generic resource is solved into an actual resource by creating a link to a BoR/BoM at the creation of a production order for a specific product.

Yet, specific goods may require use of specific process parameters in process stages (in particular, in PSs) in which non-shared resources are involved. For instance, the Vanilla/Chocolate ice cream could be packaged in containers of different kinds, such as tubs or pots, and different capacities. The container can still be modeled as an "alias" resource in the single PPR, but the packaging segment could require closing pressures or filling speeds specific for each container. Also, different packagers could be available for filling different containers and could each require different settings. The previous proposal has no provision for including information about the different parameters for the different finished goods in the single PPR: under these conditions, the MES system has no means for understanding which parameter is to be used for the specific good and thus the concept of "PPR multiple final material" cannot be exploited.

It is an object of the invention to provide a method of controlling a manufacturing process, which is based on the above concept and which allows coping with the existence of specific process parameters for specific finished goods in process stages in which non-shared resources are involved.

The aforementioned object is achieved by a method and a system comprising the step of providing the MES system with product definition information including production-related information entities containing information on how to manufacture a product, and resource-related information entities containing information about resources to be used for manufacturing that product. The step of providing the MES system with product definition information includes providing the MES system with a single production-related information entity for manufacturing a plurality of products whose manufacturing processes share most of the process workflow and most of the resources, and further includes:
- including into the single production-related information entity, for process stages in which non-shared resources are involved and which are to be performed according to parameters specific for each product in said plurality, information about the parameters to be used for each product in the plurality; and
- at the creation of a production order for a specific product, reading from the single production-related information entity and including into the order only the parameters specific for that product.

In invention embodiments, the product definition information may be preferably taken from the ISA-S95 standard and the information about the parameters is associated with product segments.

In invention embodiments, the step of including information about the parameters into the single production-related information entity comprises creating, for each process stage concerned, a table with as many rows as are the parameters and the specific products.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

Thus, embodiments of the invention provide a single product production rule for a plurality of finished goods to be produced, and said single production rule will have reference to the specific bill of material when creating a specific production order and will take into account the existence of different process parameters for the different finished goods.

The invention will now be described in preferred but not exclusive embodiments with reference to the accompanying drawings, wherein:
Fig. 1 shows the product definition information according to ISA-S95 standard;
Fig. 2 is a flow chart of the method exploiting the concept of PPR multiple final material;
Fig. 3 shows the single PPR and the BoMs of an exemplary application of the method of Fig. 2;
Fig. 4 is a flow chart of the method of the invention;
Fig. 5 shows the PPR and the BoMs of an exemplary application of the invention; and
Fig. 6 shows an example of production order created when exploiting the invention.

According to the present invention, a manufacturing process of a plant is controlled via a MES system. The MES system is provided with product definition information like that shown in Fig. 1. The product definition information includes production-related information entities, in particular at least a PPR with one or more PSs associated therewith, and resource-related information entities, in particular a BoM for each product, to which the PPR has reference.

As mentioned before, in MES systems conforming to ISA-S95 standard, there is a one-to-one correspondence between a product definition and a product. To solve the problems mentioned above inherent in this approach, according to the invention the concept of PPR multiple final material is introduced, i.e. a PPR can define the process and the resources to produce a set of finished goods (e.g. Vitamin C or Vitamin D; Vanilla Ice Cream or Chocolate Ice Cream...) instead of a single good.

Thus, referring to Fig. 2, a first step 10 of a method exploiting that concept is creating a single PPR for multiple finished goods.

The major issue related to the problem of having the same PPR working to produce different finished goods is that some of the resources are different. Referring to the above mentioned examples Vitamin C/D, Vanilla/Chocolate Ice Cream, the respective conventional product definitions share most of the process in terms of steps to be executed and share also most of the raw materials involved. However they do not share every kind of resources defined in the PPRs: in fact, in the case of the vitamins, different active principles are required; in the case of the ice creams, at least different flavors are to be used.

To attain the single PPR for different finished goods, generic materials that will be referred to as "Aliases" are stored among the PPR resources (step 11). The "Aliases" are then solved into true materials by binding them with a BoM (step 12) when the production definition must be used to really produce the finished good desired by the user, i.e. when the PPR becomes a Production Order for a specific finished good.

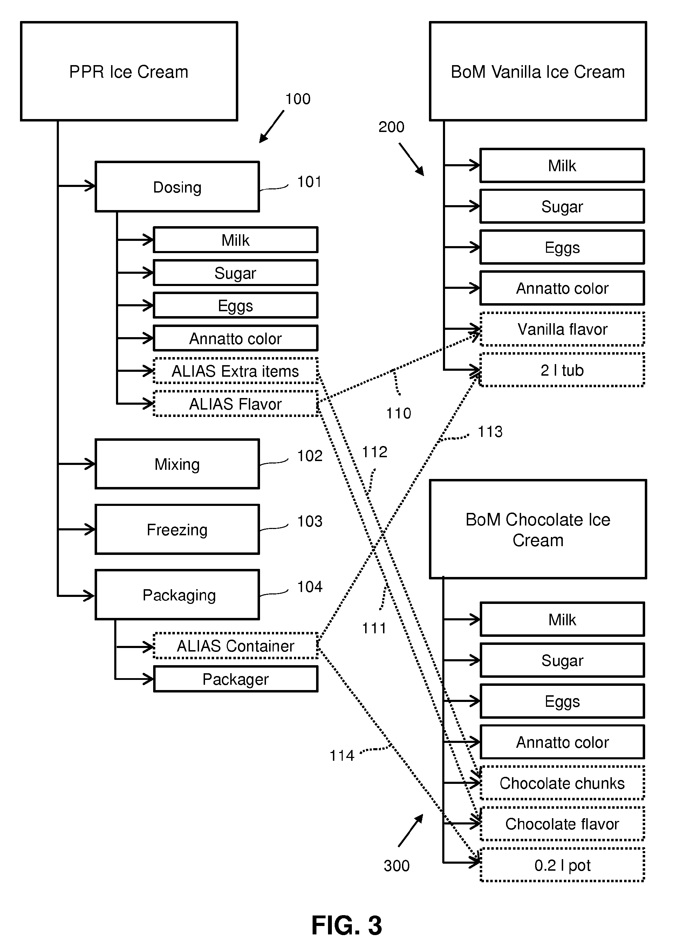

An exemplary application of the single PPR to the production of vanilla ice cream and chocolate ice cream is illustrated in Fig. 3.

On the left side a single PPR 100 is shown, containing production information for generic ice creams. On the right side two different BoMs 200, 300 are present, for vanilla ice cream and chocolate ice cream production, respectively.

PPR 100 includes a number of product segments, for instance dosing 101, mixing 102, freezing 103 and packaging 104. Dosing 101 involves use of some fixed materials like sugar, milk, eggs and a colorant (e.g. annatto color), all of which are used in the same amount whichever ice cream is to be produced. Besides, that segment involves use of other materials (the Aliases defined above), which are specific for the specific ice cream kind and which will not be defined a priori in the PPR. In the example, the Aliases in dosing segment 101 are the flavor and possible optional ingredients, referred to as extra items (in the example, chocolate chunks for the chocolate ice cream). In turn, in packaging segment 104, different containers (e.g. a 2 l tub and 0.2 l pot) are used for the different ice creams: hence the "container" in that segment is another Alias.

The PPR aliases are shown by dotted-line boxes.

Correspondingly, both BoMs 200, 300 have the fixed materials to be used in both products, plus the specific materials for the specific product, namely the vanilla and chocolate flavors, the chocolate chunks and the 2 l tub or the 0.2 l pot. The vanilla flavor and the 2 l tub in BoM 200, and the chocolate chunks, the chocolate flavor and the 0.2 l pot in BoM 300 are the aliases in the BoMs, also shown by dotted-line boxes. The links binding the Aliases in the PPR and the BoMs are shown by dotted lines 110, 111 for the flavor, 112 for the extra item and 113, 114 for the container.

In order to allow the solution of the Alias materials into the true materials, a configuration step is performed by introducing a label, e.g. a GUID (Global Unique IDentifier) or a string of characters, into the concerned product segment(s) instead of a reference to an actual material in the PPR. Correspondingly, the same GUID or string of characters is also introduced into the concerned items of the BoMs.

When a production order comes from an ERP (Enterprise Resource Planning) system, it will typically have some information items, including in particular the finished good wanted by a customer, so that the PPR will access the proper BoM and the label(s) allow (s) reading the actual material information from the BoM item(s).

For instance, considering for the sake of simplicity only the flavor alias in PPR 100, the PPR could be as follows

```
 PPR_ICE_CREAM
    |_PS_DOSING
          |_Material: Milk, 10 liters, description= "milk to
           be used for the ice cream"
          |_...
          |_Special Material (ALIAS Flavor); no description;
           ALIAS GUID = "AFED123DERF"
    |_PS_MIXING
    |_...
```

As shown, only the GUID is provided for the Alias, without further information and description.

In turn, the BoMs could be as follows:

```
 BOM_VANILLA_ICE_CREAM
    |_...
    |_VANILLA: description = "vanilla for ice cream, 1kg;
      ALIAS GUID = "AFED123DERF"
      BOM_CHOCOLATE_ICE_CREAM
    |_...
    |_CHOCOLATE: description = "chocolate for ice cream",
      1kg; ALIAS GUID = "AFED13DERF"
```

The GUID in the product segment item and in the associated BOM item implements link 110 or 111, respectively.

In similar way, a respective GUID will be introduced also for the other aliases in the PPR and the BoMs, thereby implementing links 112, 113, 114.

A further aspect to be considered when a single PPR is to be used for multiple goods is that product segments in which the Aliases are involved could require different process parameters for different goods (parameterization). The invention just provides measures for taking parameterization into account.

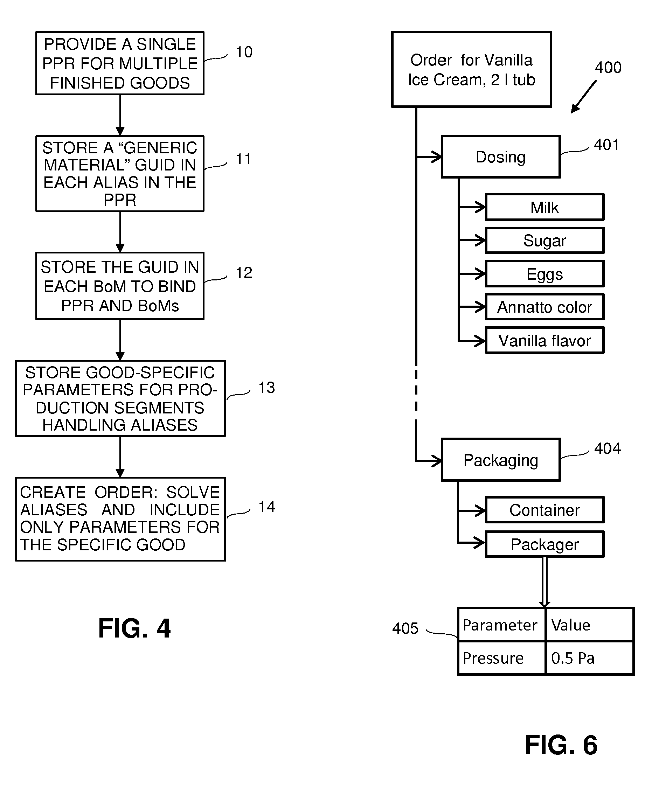

As shown in Fig. 4, the method of the invention comprises, besides steps 10 to 12, a step 13 in which, information about the kind and the values of all production parameters specific for each finished goods is included in the PPR for each production segment in which an alias concerned by parameterization is involved. The information about the parameters for each segment can be e.g. included into a table including a row for each parameter and each finished good. At the creation of the order, the aliases are solved and only the parameter (s) for the specific good is (are) read and included in the order (step 14).

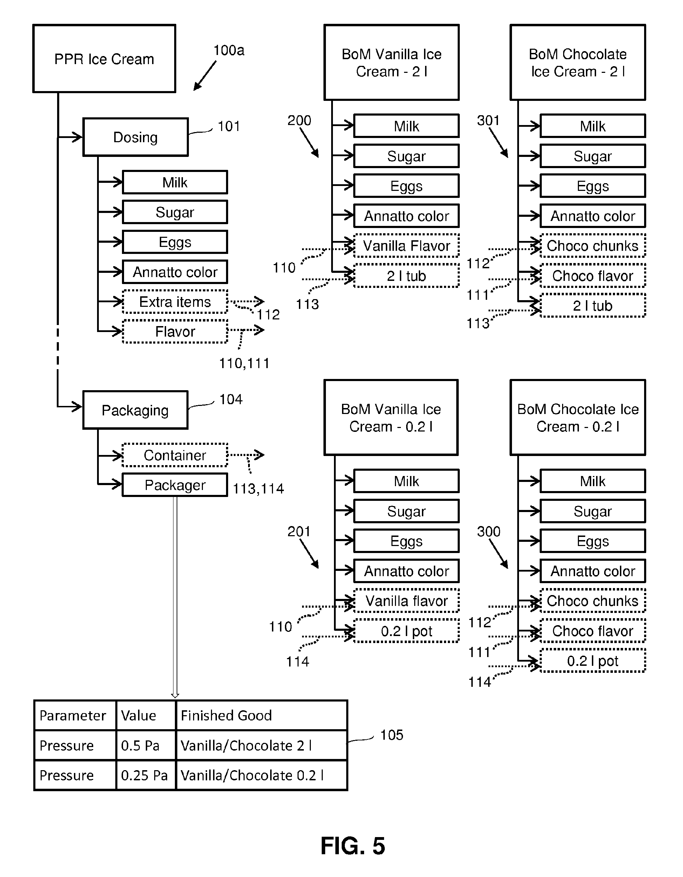

Fig. 5 shows the application of the invention to the vanilla/ice cream production, assuming that parameterization concerns packaging segment 104, and in particular the packager used for that segment. The single PPR, denoted here 100a, includes the same PSs as PPR 100 in Fig. 3 but, for the sake of simplicity, the PSs without aliases have been omitted. Two pairs of BoMs 200, 201 and 300, 301 are shown, for producing both ice creams in both a 2 l tub (BoM 200, 301) and a 0.2 l pot (BoM 201, 300). BoMs 200, 300 are the same as in Fig. 3. Always for the sake of simplicity, only the starts/ends of links 110...114 are shown, and the links to both BoMs using a same container are denoted by the same reference numerals.

In this example, only one parameter is considered, namely the pressure applied by the packager for closing the container cover. To take into account such a parameter, the packager has associated therewith table 105 where each row defines the pressure value for each finished good, e.g. 0.5 Pa for the 2 l tub and 0.25 Pa for the 0.2 l pot. The pressure values are the same for both ice creams. Of course, other parameters, such as the filling speed, could be considered in the alternative or in addition to the closing pressure. Other alternative or additional parameters could even depend on the scheduling algorithm, because a choice between different packagers could be possible and each packager could require different settings.

When the order for producing the specific good is created, the Aliases are solved as disclosed above, and only the rows of table 105 concerning the specific good to be produced are read and included in the order.

Fig. 6 shows production order 400 for producing vanilla ice cream in a 2 l tub. The reference numerals correspond to those of PPR 100a, yet beginning with digit 4. As it is apparent from Fig. 6, no alias is any longer present in the order and table 405 contains the only pressure value specific for the 2 l tub. Thanks to the provision of table 105 in the PPR, the MES can create a complete production order and the single PPR can be properly exploited for multiple products..

With embodiments of the present solution, the ISA-S95 standard can be extended by enabling product production rules not only defining several products but also taking into account different production parameters for each product.

In addition to the embodiments of the present invention described above, the skilled persons in the art will be able to arrive at a variety of other arrangements and steps which, if not explicitly described in this document, nevertheless fall within the scope of the appended claims. In particular, the "aliases" could be resources other than the materials. Moreover, parameterization could concern several product segments in which aliases are involved and several parameters for each segment.

## Claims

1. A method of controlling manufacturing processes in a plant via a MES system, comprising the step of providing the MES system with product definition information including production-related information entities (100, 100a) containing information (101...104) on how to manufacture a product, and resource-related information entities (200, 201, 300, 301) containing information about resources to be used for manufacturing that product, wherein for manufacturing a plurality of products whose manufacturing processes share most of a process workflow and most of the resources, the step of providing the MES system with product definition information includes the steps of:
- providing the MES system (10) with a single production-related information entity (100; 100a);
- storing in said single production-related entity (11), for a non-shared resource, a label defining said non-shared resource as a generic resource;
- solving the generic resource into an actual resource (12) by creating a link (110...114) to a resource-related information entity (200, 300) at the creation of a production order (400) for a specific product;
the method being **characterized in that** the step of providing the MES system with a single production-related information entity further includes the steps of:
- including (13) into the single production-related information entity (100a), for process stages in which non-shared resources are involved and which are to be performed according to parameters specific for each product in said plurality, information (105) about the parameters to be used for the different products; and
- at the creation of a production order (400) for a specific product, reading from the single production-related information entity (100a) and including into the order only the parameters specific for that product;
the production order being then executed by operating the plant with said resources and said parameters.

2. The method according to claim 1, wherein said production-related information entities and said resource-related information entities belong to a product definition information according to the ISA-S95 standard and said information (105) about the parameters is associated with product segments.

3. The method according to claim 2, wherein said information (105) about the parameters is associated with equipment used for executing said product segments.

4. The method according to any of the previous claims, wherein said including step (13) comprises creating and storing, for each said process stage, a table with as many rows as are the parameters and the specific products.

5. A system for controlling a manufacturing process in a plant via a MES system, comprising means for providing the MES system with product definition information including production-related information entities (100; 100a) containing information (101...104) on how to manufacture a product, and resource-related information entities (200, 201, 300, 301) containing information about resources to be used for manufacturing that product, wherein said providing means are arranged to provide the MES system with a single production-related entity (100; 100a) for manufacturing a plurality of products whose manufacturing processes share most of a process workflow and most of the resources, and include:
- means for storing in said single production-related entity (100; 100a), for a non-shared resource, a label defining said non-shared resource as a generic resource;
- means for solving the generic resource into an actual material by creating a link (110...114) to a resource-related entity (200, 201, 300, 301) at the creation of a production order for a specific product;
the system being **characterized in that** said providing means are arranged to:
- include into the single production-related information entity (100a), for process stages in which non-shared resources are involved and which are to be performed according to parameters specific for each product in said plurality, information (105) about the parameters to be used for the different products; and
- at the creation of a production order (400) for a specific product, read from the single production-related information entity (100a) and include into the order only the parameters specific for that product.

6. A computer program product for performing steps of the method according to any of claims 1 to 4.
